(19) **Europäisches Patentamt**

**European Patent Office**

**Office européen des brevets**

(11) **EP 1 001 521 A2**

(12) **EUROPEAN PATENT APPLICATION**

(43) Date of publication:
**17.05.2000 Bulletin 2000/20**

(51) Int. Cl.⁷: **H02P 5/00**, B65H 54/74

(21) Application number: **99122399.1**

(22) Date of filing: **10.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **10.11.1998 JP 31862298**

(71) Applicant:
**MURATA KIKAI KABUSHIKI KAISHA
Kisshoin, Minami-ku Kyoto-shi 601 (JP)**

(72) Inventors:
• **Kino, Yoshihiro
Uji-shi, Kyoto (JP)**
• **Tanaka, Hiroshi
Kameoka-shi, Kyoto (JP)**

(74) Representative:
**Liedl, Christine, Dipl.-Chem. et al
Albert-Rosshaupter-Strasse 65
81369 München (DE)**

(54) **Motor control device and method, and take-up winding system**

(57) The present invention provides a device and method that operates in a take-up winding system to control a spindle motor and a godet roller motor using a rotation speed control device (an inverter). A motor control device comprises a storage means for storing a rated acceleration line, an acceleration start voltage setting means for setting an acceleration start voltage, an acceleration end voltage setting means for setting a target rotation speed and an acceleration end voltage at that rotation speed, and a voltage reduction means for reducing a voltage from the set acceleration end voltage down to a value on the rated acceleration line when the rotation speed of the motor reaches the target value. A motor control method comprises setting the acceleration start voltage and acceleration end voltage so that the motor is accelerated according to an acceleration line having a larger voltage than the rated acceleration line between the start and end of acceleration and so that when a preset target rotation speed is reached, the voltage is reduced down to a value on the rated acceleration line.

EP 1 001 521 A2

Printed by Xerox (UK) Business Services
2.16.7 (HRS)/3.6

## Description

Field of the Invention

The present invention relates to a motor control device and method used it, for example, a motor must be accelerated to a higher rotation speed within a short time, and in particular, to a motor control device and method that operates in, for example, a take-up winding system to control a spindle motor and a godet roller motor using a rotation speed control device (an inverter).

Background of the Invention

A motor control is conventionally done so that after a target rotation speed (frequency) has been set, a motor is accelerated by gradually increasing a voltage so as to achieve that frequency. In particular, for motor control required to drive a yarn processing roller for a filament yarn spun by a spinning machine, a motor must be accelerated to a higher rotation speed within a short time, thereby requiring a large acceleration torque. During a steady state after acceleration has ended, such a motor is operated at a constant speed and is not required to provide a very high power. A high-power motor, however, is usually used to obtain an acceleration torque required for rapid acceleration.

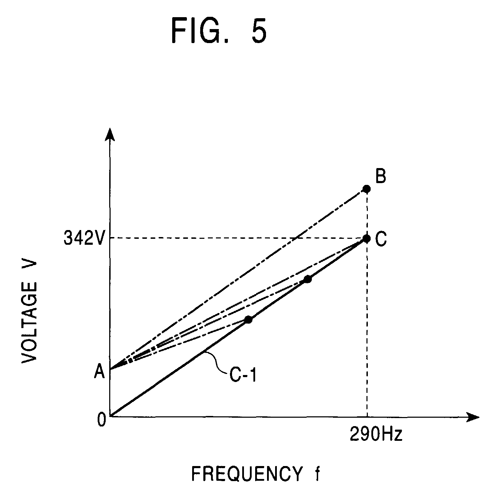

In addition, since at low rotation speeds, conventional motor control is significantly affected by a voltage drop caused by resistance from the inside of the motor, some control systems have a function for setting an arbitrary voltage at point A that is an acceleration start point in order to compensate for an insufficient torque obtained at the low rotation speed. In this case, as shown in Figure 5, the motor is accelerated according to a characteristic indicated by the straight line joining point A that is an acceleration start point with point C that is an acceleration end point. Thus, the torque may become insufficient prior to the end of acceleration, when a windage loss, which increase in proportion to the cube of the rotation speed, increases despite a constant inertia.

If a higher-power motor is used to compensate for the insufficient torque, power consumption increases to degrade efficiency.

Thus, the present invention attempts to solve these problems with the prior art, and its object is to provide a motor control device and method for reliably and efficiently obtaining a required acceleration torque without using a high-power motor, in using an inverter and the V/f method (the most common control method) to control loads such as a spindle motor and a godet roller motor for a take-up winding system that must be accelerated to a higher rotation speed within a short time.

Summary of the Invention

In order to achieve this object, the present invention specifically provides a motor control device for controlling the acceleration of a motor while increasing a voltage in response to an increase in frequency, the device comprising an acceleration end voltage setting means for setting a target rotation speed and an acceleration end voltage at that rotation speed.

Furthermore, the present invention provides a motor control device comprising a voltage reduction means for reducing the terminal voltage of the motor down to the rated value at the target rotation speed when the rotation speed of the motor reaches the target value. In order to prevent the rotation of the motor from varying, the voltage reduction means preferably spends a predetermined amount of time in carrying out the voltage reduction while maintaining the target rotation speed.

In addition, for a motor control device for controlling the acceleration of a motor while increasing a voltage in response to an increase in frequency, the present invention provides a motor control method for controlling the acceleration of a motor so that based on a set acceleration end voltage, an acceleration end voltage larger than a rated value is achieved at the end of acceleration.

Brief Description of the Drawing

Figure 1 is a schematic front view showing the overall configuration of a take-up winding system according to a preferred application of a motor control device and method of the present invention.

Figure 2 is a schematic side view of the take-up winding system as seen from its side.

Figure 3 is a voltage-frequency characteristic curve diagram representing a comparison between a V/f acceleration line C-2 for motor control according to the present invention and a normal acceleration line C-1.

Figure 4 is a flowchart of motor control according to the present invention.

Figure 5 is a voltage-frequency characteristic curve diagram of conventional motor control.

Detailed Description of the Preferred Embodiments

A motor control device and method according to the present invention will be described below in detail based on the specific embodiments shown in the drawings.

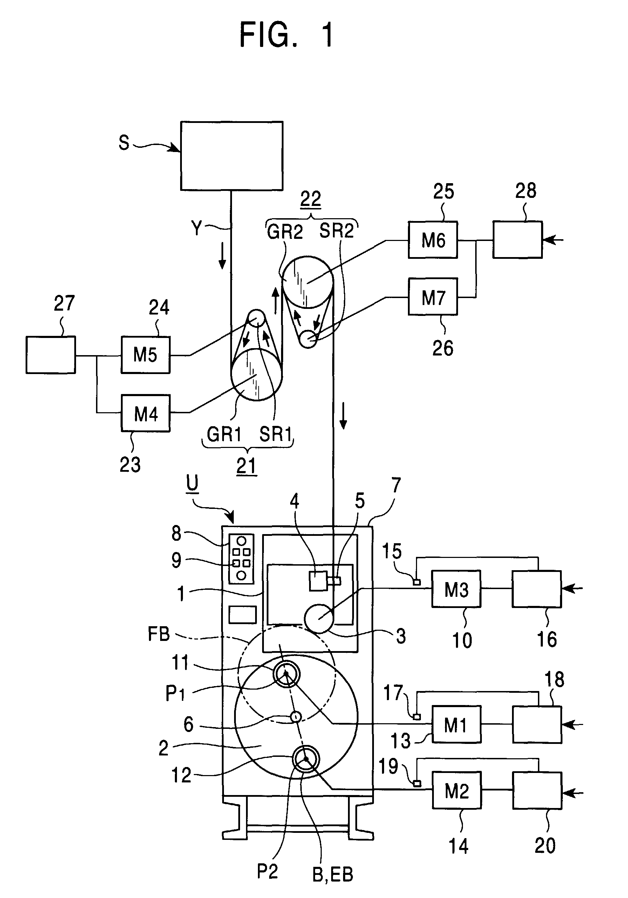

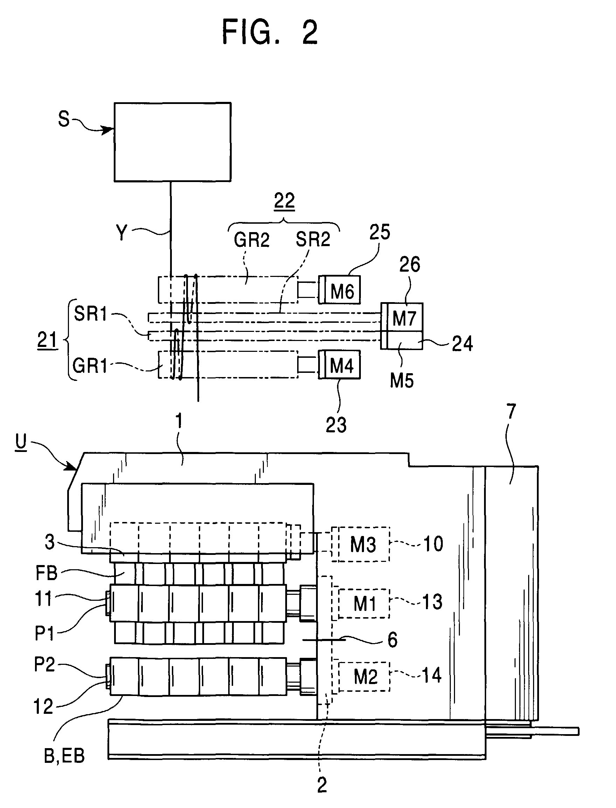

First, the basic structure of a take-up winder U according to a preferred application of the present invention will be described based on Figures 1 and 2. In Figure 1, the take-up winder U includes a body frame 7, and the body frame 7 has an elevating box 1 that can go up and down freely, a rotatable turret plate 2, and a fixed frame 8 having an operation panel 9 at its front end.

A contact roller 3 and a traverse device 4 are supported in the elevating box 1. The contact roller 3 is in pressure contact with the surface of a filament yarn layer on a bobbin B at a winding position P1 and is rotationally driven by a drive source 10 comprising a motor M3 as shown in Figures 1 and 2, in order to rotate the bobbin B, which is being wound, counterclockwise in Figure 1. The drive source 10 comprising the motor M3 is controlled by a contact roller driving motor control means 16 including a contact roller rotation speed detection means 15. The contact roller rotation speed detection means 15 is a pulse generator and the contact roller driving motor control means 16 is composed of an inverter.

In addition, the traverse device 4 has a traverse guide 5 that engages with a filament yarn Y and that runs over a traverse range to traverse the filament yarn Y.

The turret plate 2 can be rotated around a rotating shaft 6 by a rotational driving device (not shown in the drawings). A first bobbin holder 11 and a second bobbin holder 12 are rotatably supported by the turret plate 2 so as to protrude therefrom and each have a plurality of (in Figure 2, six) bobbins B installed thereon. The first bobbin holder 11 is located at the winding position P1, while the second bobbin holder 12 is located at a standby position P2.

As shown in Figures 1 and 2, the first bobbin holder 11 is rotationally driven by a drive source 13 comprising a motor M1, and the second bobbin holder 12 is rotationally driven by a drive source 14 comprising a motor M2. The drive source 13 comprising the motor M1 is controlled by a first bobbin holder driving motor control means 18 including a first bobbin holder rotation speed detection means 17, whereas the drive source 14 comprising the motor M2 is controlled by a second bobbin holder driving motor control means 20 including a second bobbin holder rotation speed detection means 19. The rotation speed detection means 17, 19 are each composed of a pulse generator, and each driving motor control means 18, 20 is composed of an inverter that can accelerate and decelerate the motor at an arbitrary frequency.

The filament yarn Y is continuously wound by winding the filament yarn Y around the bobbin B in the bobbin holder 11 located at the winding position P1, rotating the turret plate 2 through 180 degrees each time the bobbin B becomes a full bobbin FB, moving the full bobbin FB at the winding position P1 to the standby position P2 while moving an empty bobbin EB provided at the standby position P2 to the winding position P1, and using a yarn switching mechanism to switch the filament yarn Y front the full bobbin FB to the empty bobbin EB.

The plurality of (in the example shown in Figure 2, six) bobbins B are inserted and installed on each of the bobbin holders 11, 12, and during winding, the bobbin holder 11 is located at the winding position P1, while the bobbin holder 12 is located at the standby position P2.

In this take-up winder U, the filament yarn Y is introduced through the traverse guide 5 of the traverse device 4 into the bobbin B at the winding position P1, where the bobbin B is in contact with the contact roller 3.

On the other hand, according to the present invention, a first godet roller mechanism 21 and a second godet roller mechanism 22 for guiding the filament yarn Y spun by a spinning machine S are disposed on the upstream side of the take-up winder U. The first godet roller mechanism 21 has a godet roller GR1 and a separate roller SR1, and the second godet roller mechanism 22 has a godet roller GR2 and a separate roller SR2. The filament yarn Y is drawn based on the difference between the peripheral speed of the first godet roller mechanism 21 and the peripheral speed of the second godet roller mechanism 22.

The first and second godet roller mechanisms 21 and 22 draw the filament yarn Y spun by the spinning machine S, prior to introduction to the take-up winder U, and the godet rollers GR1 and GR2 are each composed of a heating roller. The filament yarn spun by the spinning machine S is passed through the godet roller GR1 and separate roller SR1 of the first godet roller mechanism 21 and through the godet roller GR2 and separate roller SR2 of the second godet roller mechanism 22 and is then introduced to the take-up winder U.

The godet roller GR1 of the first godet roller mechanism 21 is rotationally driven by a drive source 23 comprising a motor M4, and the separate roller SR1 of the first godet roller mechanism 21 is rotationally driven by a drive source 24 comprising a motor M5. The godet roller GR2 of the second godet roller mechanism 22 is rotationally driven by a drive source 25 comprising a motor M6, and the separate roller SR2 of the second godet roller mechanism 22 is rotationally driven by a drive source 26 comprising a motor M7.

The motors M4, M6 for the godet rollers and the motors M5, M7 for the separate rollers in the godet roller mechanisms 21, 22 rotate at a constant speed during a steady state after acceleration, while the motors M1, M2 for the first and second bobbin holders gradually decelerate in the steady state in response to an increase in bobbin diameter (the peripheral speed is constant). In the steady state, the contact roller motor M3 rotates at a constant speed so that its peripheral speed is approximately the same as the peripheral speed of the surface of a filament yarn layer on the bobbin B held by the bobbin holder 11 at the winding position P1.

The motors for the godet rollers and the motors for the separate rollers in each of the godet roller mechanisms 21, 22 are composed of synchronous motors that have different numbers of poles and thus different rotation speeds, however, both rollers have an equal peripheral speed.

The godet roller drive source 23 and the separate roller drive source 24 for the first godet roller mechanism 21 are controlled by a driving motor control means 27 for the first godet roller mechanism. The godet roller drive source 25 and the separate roller drive source 26 for the second godet roller mechanism 22 are controlled by a driving motor control means 28 for the second godet roller mechanism.

Then, a method for controlling the motor according to the present invention will be theoretically explained.

First, with respect to methods for controlling an inverter for efficiently operating a motor during a rated operation of, for example, a winder, a specification required for a spindle motor (an induction motor: 6 kw to steady 2 kw) and a godet roller motor (a synchronous motor: 3.5 kw to steady 1.5 kw) is that the motor is accelerated up to a maximum rotation speed (for the godet roller motor, 8,700 rpm) within 60 seconds. In this case, $GD^2$ is constant, so the required acceleration torque is given by the following equation:

$$\text{Acceleration torque } T = (GD^2 \cdot N) / 375 t$$

where $GD^2$:kgf $\cdot$ $m^2$ (inertia); N: rpm (rotation speed); T: kg $\cdot$ m(torque); and t: second (time).

On the other hand, the torque of the motor in terms of the inverter is given by the following equation:

$$T = K1 \cdot (V/f)^2$$

where T: torque; V: terminal voltage; f: frequency; and $K^1$ : constant.

The motor control device controls the acceleration of the motor while increasing the voltage toward a target rotation speed in response to an increase in frequency. By maintaining a constant V/f in the above equation to make the acceleration region a constant torque region, a required acceleration torque can be obtained regardless of a starting rotation speed that is increased up to the target value, thereby enabling normal acceleration control. As in the above equation, the maximum motor torque is proportional to the square of the terminal voltage. Within a predetermined amount of time, the motor specification permits a maximum load of approx. 200% (twice as large as the rated load) (the motor, however, may be seized if the load is applied over a long time).

Thus, this embodiment uses a motor that continuously increases the terminal voltage of the motor between the start and end of acceleration so that it becomes approximately. 1.4 times as large as the rated voltage, in order to generate an acceleration torque required during acceleration while the V/f characteristic in the motor rated specification is double the initial value. Then, when the target rotation speed corresponding to the end of acceleration is reached, the voltage is reduced down to the rated value to provide the motor with a load required to rotate it at a specified speed, thereby increasing efficiency while obtaining the required acceleration torque, using motors of a minimum capacity.

This embodiment comprises not only the acceleration start setting means capable of setting the acceleration start voltage at a value higher than the rated voltage but also a voltage setting means capable of setting the acceleration end voltage at the target rotation speed, at a value higher than the rated value. Consequently, the required acceleration torque can be obtained even immediately before the end of acceleration, when a windage loss caused by rotations may increase. In the above equation, the torque of the motor in terms of the inverter is a torque applied to the motor due to control provided by the inverter, and constant K1 is determined by the motor.

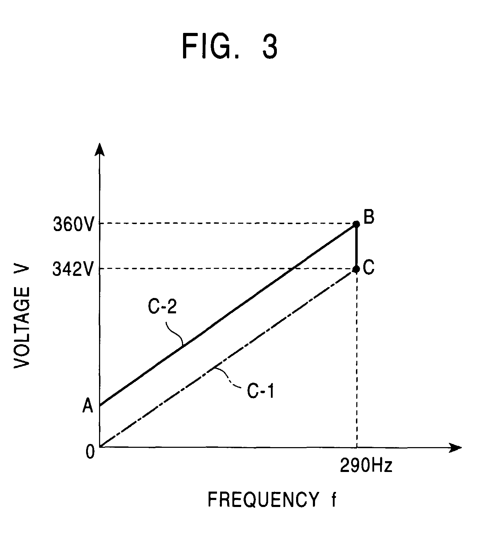

The principle of the motor control device and method according to the present invention will be described with reference to Figure 3.

As shown in Figure 3, the frequency at the end of acceleration (the frequency of 290 Hz at points B and C) corresponds to the target rotation speed and thus a maximum accelerative frequency (a limit frequency). The present invention can set not only an acceleration time and the voltage at the acceleration start point A but also the frequency (maximum rotation speed) and voltage at the acceleration end point B. Thus, while maintaining a constant V/f value, the motor is accelerated according to a characteristic following a rated acceleration line stored in a storage means (a first V/f curve [C-1]) and then an acceleration line for which the voltage is increased between the start and end of acceleration (a second V/f curve [C-2]). Once the maximum rotation speed (target rotation speed) has been reached, the voltage is reduced down to the value (the rated voltage) corresponding to the maximum rotation speed on the rated acceleration line.

The rated acceleration line is a straight line indicating a characteristic of the voltage in which it increases with increasing frequency between the start and end of acceleration in Figure 3. During the voltage reduction (from point B to point C), instead of instantaneous reduction, a predetermined amount of time should be spent and a predetermined rate should be used while maintaining the maximum rotation speed. By reducing the voltage down to the rated value immediately after the maximum rotation speed has been reached to eliminate the needs for a large torque, power consumption can be reduced and the motor can be prevented from being seized. In particular, by spending a predetermined amount of time in reducing the voltage, the variation of the rotation caused by a rapid torque phenomenon can be precluded to prevent the yarn quality from being degraded. The maximum rotation speed is detected based on an instructed frequency for synchronous motors and on an output from the pulse generator for induction motors.

Although the following example shows a case in which the target rotation speed is set at the maximum rotation speed (the limit rotation speed), the acceleration end voltage setting means can set the target rotation speed at an arbitrary value within a constant torque region. That is, an arbitrary rotation speed smaller than or equal to the maximum value can be set as the target rotation speed, and the acceleration end voltage can be set at the value at that target rotation speed. In this case, the acceleration can be ended at an arbitrary point on the straight line A-B, depending on the setting, and the voltage can then gradually reduced down to a value on the rated acceleration line C-1 corresponding to the set frequency. By allowing the target rotation speed to be set at an arbitrary value, the present motor control device can be used under various conditions including different target rotation speeds or acceleration times. If the target rotation speed is set within a torque reduction region outside the constant torque region, the torque becomes insufficient immediately before the end of acceleration, when the windage loss any increase, thereby preventing normal acceleration control.

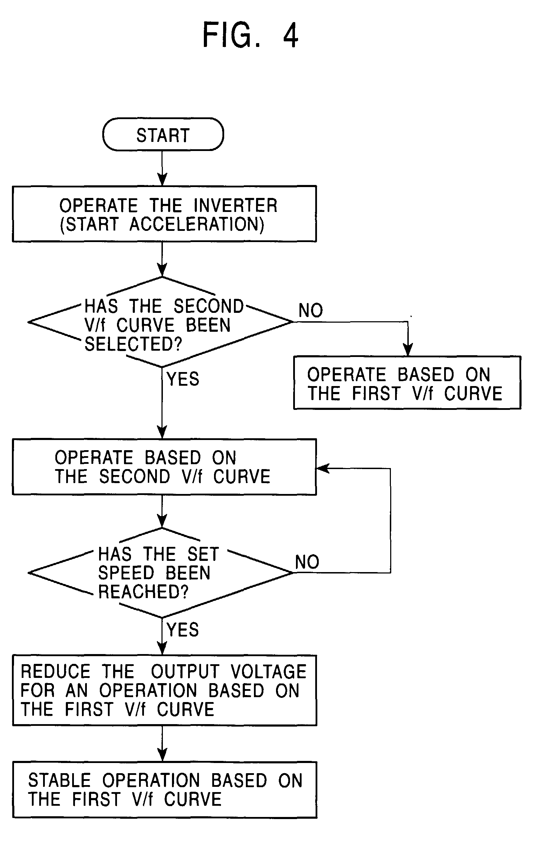

Figure 4 shows a flowchart for the motor control device and method according to the present invention.

As shown in Figure 4, a start instruction operates the inverter to effect shifting to an acceleration start state. The process then determines whether the second V/f curve [C-2] has been selected. If so, the operation is based on the second V/f curve, and otherwise, the operation is based on the first V/f curve. Thus, whether the second V/f curve is selected at the start of acceleration can be set for the inverter, so the voltage increase control can be provided as required to enable the motor to be efficiently controlled under various operational conditions.

An operation is performed based on the selected second V/f curve considering the acceleration time set by the acceleration time set means. The process then determines whether the set speed (the target rotation speed) has been reached, and if so, the output voltage is reduced for an operation based on the first V/f curve [C-1]. The operation is subsequently performed at a constant speed based on the first V/f curve.

The present invention is applied to, for example, a take-up winding system wherein a rotation speed control device (an inverter) is used to control spindle motor or a godet roller motor. The present invention, however, is also effective in a case in which a motor must be accelerated rapidly up to a high rotation speed within a predetermined amount of time. Furthermore, the spindle motor and the godet roller motor may be an induction motor or a synchronous motor, respectively.

For an induction motor (in which an instructed frequency does not agree with the corresponding drive frequency), for example, a rotation speed sensor such as a pulse generator is used to detect the drive frequency in order to detect that a target rotation speed has been reached. For a synchronous motor (in which an instructed frequency agrees with the corresponding drive frequency), whether a target rotation speed has been reached can be detected using only internal processing by a central processing unit and without a rotation speed sensor. The present control device includes a central processing unit that constitutes an acceleration start voltage setting means, an acceleration end voltage setting means, an acceleration time setting means, and a voltage reduction means.

The motor control device and method configured as described above is very effective in that even if a rotating body having a large inertia is to be accelerated rapidly, a motor of a minimum capacity can be efficiently controlled.

## Claims

1. A motor control device for a textil machine performing, for example, an automatic yarn winding and/or a spinning process for controlling the acceleration of the motor while increasing the terminal voltage of the motor in response to an increase in frequency, characterized in that the device comprises an acceleration end voltage setting means for setting a target rotation speed and an acceleration end voltage at that rotation speed such that the acceleration end voltage is larger than a rated value, and a voltage reduction means for reducing the terminal voltage of the motor down to the rated value at the target rotation speed when the rotation speed of the motor reaches the target value.

2. A motor control device as in Claim 1, characterized in that the device comprises an acceleration start voltage setting means for setting the terminal voltage of the motor required to start acceleration.

3. A motor control device as in Claim 2, characterized in that the device comprises a strage means for storing a first acceleration line for defining an increase in rated voltage associated with an increase in frequency, and a storage means for storing a second acceleration line for defining an increase in the terminal voltage of the motor associated with an increase in frequency based on the acceleration start voltage set by the acceleration start voltage setting means and the acceleration end voltage set by the acceleration end voltage setting means so that either the first or second acceleration line can be selected to control acceleration.

4.  A motor control device as in any one of Claims 1 to 3, characterized in that said voltage reduction means spends a predetermined amount of time in carrying out said voltage reduction while maintaining a rotation speed of the motor to the target rotation speed.

5.  A motor control device as in any one of Claim 1 to 4, characterized in that the device comprises an acceleration time setting means for setting the acceleration time between the start and end of acceleration.

6.  A motor control method for a textil machine performing, for example, an automatic yarn winding and/or a spinning process for controlling the acceleration of the motor while increasing the terminal voltage of the motor in response to an increase in frequency, characterized in that the method comprises controlling the acceleration of the motor based on a set acceleration end voltage so that the terminal voltage of the motor is maintained lager than a rated value between the start and end of acceleration, and reducing the terminal voltage of the motor down to the rated value at the present target rotation speed when the rotation speed of the motor reaches the target value.

7.  A motor control method as in Claim 6, characterized in that said voltage reduction requires a predetermined amount of time and is carried out while maintaining a rotation speed of the motor to the target rotation speed.

8.  A take-up winding system comprising a spinning machine, a godet roller for drawing a filament yarn spun by the spinning machine, and a take-up winder for winding the filament yarn drawn by the godet roller, characterized in that the system comprises a control means for controlling a motor that drives the godet roller, the control means controlling the acceleration of a motor while increasing the voltage in response to an increase in frequency and comprising an acceleration end voltage setting means for setting a target rotation speed and an acceleration end voltage at that rotation speed, and a voltage reduction means for reducing the voltage down to the rated value at the target rotation speed when the rotation speed of the motor reaches the target value.

# FIG. 1

# FIG. 2

# FIG. 3

EP 1 001 521 A2

# FIG. 4

```
              ┌─────────────┐
              │    START    │
              └──────┬──────┘
                     ▼
        ┌────────────────────────┐
        │  OPERATE THE INVERTER  │
        │  (START ACCELERATION)  │
        └───────────┬────────────┘
                    ▼
              ╱ HAS THE SECOND ╲        NO
             ◁  V/f CURVE BEEN  ▷──────────┐
              ╲  SELECTED?     ╱           │
                    │                      ▼
                    │ YES        ┌──────────────────┐
                    │            │ OPERATE BASED ON │
                    │            │ THE FIRST V/f CURVE│
                    │            └──────────────────┘
                    ▼
        ┌────────────────────────┐
        │   OPERATE BASED ON     │◁───────┐
        │   THE SECOND V/f CURVE │        │
        └───────────┬────────────┘        │
                    ▼                      │
              ╱ HAS THE SET  ╲     NO      │
             ◁  SPEED BEEN    ▷────────────┘
              ╲  REACHED?    ╱
                    │ YES
                    ▼
        ┌────────────────────────────┐
        │ REDUCE THE OUTPUT VOLTAGE  │
        │ FOR AN OPERATION BASED ON  │
        │ THE FIRST V/f CURVE        │
        └───────────┬────────────────┘
                    ▼
        ┌────────────────────────────┐
        │ STABLE OPERATION BASED ON  │
        │ THE FIRST V/f CURVE        │
        └────────────────────────────┘
```

# FIG. 5